Europäisches Patentamt

European Patent Office

Office européen des brevets

(11) Veröffentlichungsnummer: **0 160 834 B1**

# EUROPÄISCHE PATENTSCHRIFT

(45) Veröffentlichungstag der Patentschrift: 30.10.91

(21) Anmeldenummer: 85103964.4

(22) Anmeldetag: 02.04.85

(51) Int. Cl.5: **G05D 1/08**, G05D 1/00, B64C 13/50

(54) Vorrichtung zur Steuerkraftstabilisierung bei einem Drehflügelflugzeug.

(30) Priorität: 08.05.84 DE 3416969

(43) Veröffentlichungstag der Anmeldung:
13.11.85 Patentblatt 85/46

(45) Bekanntmachung des Hinweises auf die Patenterteilung:
30.10.91 Patentblatt 91/44

(84) Benannte Vertragsstaaten:
DE FR GB IT

(56) Entgegenhaltungen:
EP-A- 0 003 947          EP-A- 0 175 883
FR-A- 2 377 323          GB-A- 2 050 980
GB-A- 2 065 042          US-A- 3 700 995

(73) Patentinhaber: **Messerschmitt-Bölkow-Blohm Gesellschaft mit beschränkter Haftung Robert-Koch-Strasse W-8012 Ottobrunn(DE)**

(72) Erfinder: **König, Herbert, Dipl.-Ing. Schönstrasse 45 W-8000 München 90(DE)**

EP 0 160 834 B1

## Beschreibung

Die Erfindung betrifft eine Vorrichtung zur Steuerkraftstabilisierung bei einem Drehflügelflugzeug, gemäß dem Oberbegriff des Patentanspruchs 1.

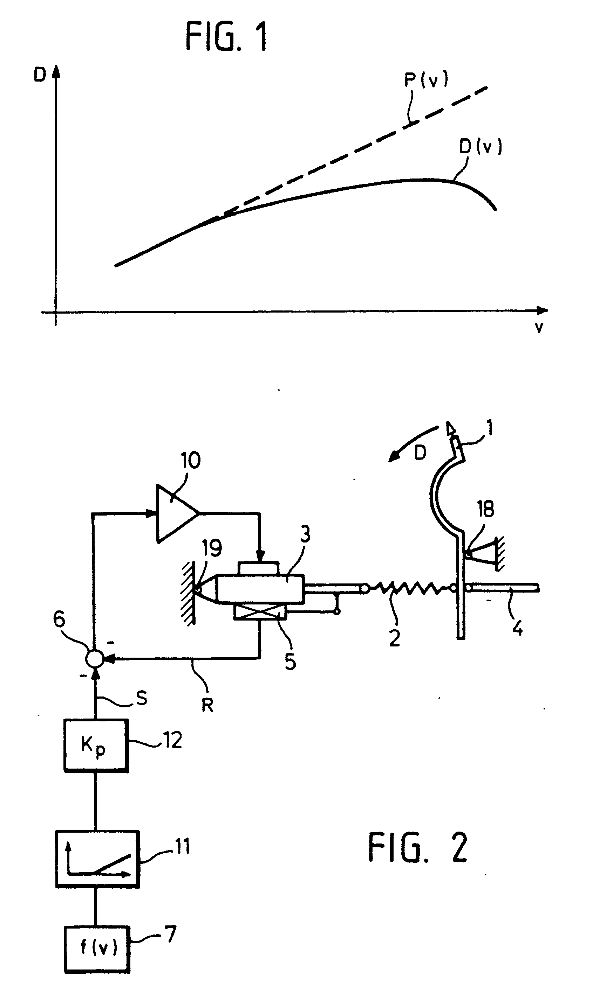

Um die horizontale Fluggeschwindigkeit eines Drehflügelflugzeuges oder Hubschraubers zu verändern, wird der Pilot zunächst den Leistungshebel betätigen, der die kollektive Rotorblatteinstellung beeinflußt. Damit infolge dieser Maßnahme ein Geradeausflug nicht in einen Steig- bzw. Sinkflug übergeht, muß gleichzeitig die Nicklage des Haubschraubers entsprechend korrigiert werden, wozu der Steuerknüppel dient, der die zyklische Rotorblatteinstellung beeinflußt. Bei nicht zu hohen Fluggeschwindigkeiten existiert zwischen der Nicklage und der Stellung des Steuerknüppels ein eindeutiger Zusammenhang dahingehend, daß der Steuerknüppel mit zunehmender Fluggeschwindigkeit immer weiter nach vorn zu kippen ist, verbunden mit einem gleichzeitigen Absenken der Hubschraubernase. Außerdem spürt der Pilot beim Vorwärtskippen des Steuerhebels einen zunehmenden Widerstand, so daß ihm eine höhere Steuer- bzw. Handkraft unmittelbar eine erhöhte Fluggeschwindigkeit signalisiert. Bei einigen modernen Hubschraubern, die mit über 100 Knoten Geschwindigkeit fliegen können, treten im oberen Geschwindigkeitsbereich jedoch Probleme auf, die darin bestehen, daß der bisher eindeutige Zusammenhang zwischen Steuer- bzw. Handkraft, Neigung des Steuerknüppels und Fluggeschwindigkeit umgekehrt wird: Die diesen Zusammenhang wiedergebende Kurve geht von einem Bereich positiver Steigung in einen solchen negativer Steigung über, wie dies in Fig. 1 dargestellt ist.

In Fig. 1 ist der Längssteuerweg D über der Fluggeschwindigkeit v, gemessen in Knoten, aufgetragen. Demgemäß steigt (siehe die durchgezogene Kurve) der Längssteuerweg zunächst mit der Fluggeschwindigkeit an, um dann ein Maximum zu durchlaufen und bei hohen Fluggeschwindigkeiten wieder abzufallen. Hiermit verbunden wäre eine entsprechende Absenkung der Steuer- bzw. Handkraft, die normalerweise dem Längssteuerweg proportional ist. Um eine Erhöhung der Fluggeschwindigkeit herbeizuführen, müsste der Pilot bei hohen Ausgangsgeschwindigkeiten infolgedessen nach der Betätigung des Leistungshebels den Steuerknüppel zurücknehmen, d.h. einen nach hinten gerichteten Zug auf ihn ausüben. Dies ist jedoch nach den für Hubschrauber geltenden technischen Vorschriften nicht zugelassen. Vielmehr ist verlangt, daß der Pilot in jedem Geschwindigkeitsbereich bei einem Verstellen des Steuerknüppels im Sinne einer Fluggeschwindigkeitserhöhung immer einen nach hinten gerichteten Widerstand des Steuerknüppels spüren muß, und daß dieser Widerstand bei einer Korrekturbewegung mit dem Ziel einer Fluggeschwindigkeitserhöhung zuzunehmen hat. Ein derartiges Verhalten ergibt sich jedoch nicht aus der durchgezogenen Kurve in Fig. 1. Es sind demnach entsprechende Maßnahmen zur Steuerkraftstabilisierung erforderlich.

Die vorliegende Problematik wird noch dadurch erhöht, daß die in Fig. 1 dargestellte durchgezogene Kurve in ihrer Lage von verschiedenen Parametern abhängt, beispielsweise der Beladung und Gewichtsverteilung innerhalb des Hubschraubers oder der Lufttemperatur. Dies macht es für den Piloten schwierig, von vornherein festzustellen, in welchem Bereich der Kurve er sich gerade befindet.

In der EP-A1 0 003 947 ist eine Vorrichtung der eingangs genannten Art, beschrieben, bei der der vorstehenden Problematik Rechnung getragen wird. Auch dort geht es darum, mit Hilfe von Zusatzmaßnahmen die an sich bei hohen Fluggeschwindigkeiten vorliegende negative Steigung der durchgezogenen Kurve in Fig.1 in eine positive Steigung umzuwandeln. Hierzu wird in das Steuergestänge eingegriffen, welches am Steuerknüppel angelenkt ist, um die zyklische Rotorblatteinstellung zu beeinflussen. In das Steuergestänge ist, in dessen Längsrichtung wirkend, mindestens ein längenveränderliches Glied, etwa ein Stellantrieb, eingebaut, mit dessen Hilfe durch gesteuerte Verlängerung des Steuergestänges ein Stellkommando auf den Rotor gegeben werden kann, ohne daß der Pilot die Stellung des Steuerknüppels ändert. Dem Stellantrieb wird ein Signal zugeleitet, welches einen geschwindigkeitsabhängigen und einen aus der Stellung des Leistungshebels abgeleiteten Anteil aufweist. Im Wege der Signalbildung liegen verschiedene elektronische Komponenten, wie Verstärker, Summationsglieder, Referenzspannungsquellen, Differenzierglieder und Begrenzerstufen. Der bei Eintreffen eines Signals durch den Stellantrieb bewirkte Stellweg wird mittels eines Weggebers gemessen und an den Eingang des dem Stellantrieb vorgeschalteten Verstärkers zurückgeführt. Mit dieser Einrichtung gelingt es zwar, die in Fig.1 dargestellte durchgezogene Kurve derart zu modifizieren, daß der bei höheren Fluggeschwindigkeiten auftretende Bereich negativer Steigung in einen solchen mit positiver Steigung übergeht, jedoch ergeben sich aus dem gewählten Systemaufbau auch Nachteile. Diese bestehen vor allem darin, daß Störungen in dem Signalweg, der dem im Steuergestänge angeordneten Stellantrieb vorgeschaltet ist, sich sofort und unmittelbar auf den Rotor auswirken, wobei der Pilot erst nach dem Einsetzen der durch die Störung bewirkten unerwünschten Bewegung des Hubschraubers und einer entsprechenden Reaktionszeit die Möglichkeit zum Eingreifen hat. Bei einem unvermittelt durch eine Störung ausgelösten Sturzflug kann dies zur Katastrophe führen. Um dies auf jeden Fall zu vermeiden, müssten sämtliche im vorgeschalteten Signalweg benötigten Komponenten redundant ausgelegt sein. Dies erfordert jedoch einen hohen und möglicherweise nicht vertretbaren apparativen Aufwand.

Im übrigen bleibt bei der in der EP-A1 0 003 947 geschilderten Steuervorrichtung unklar, wie die Steuer- bzw. Handkraft gemäß der weiter oben gegebenen Forderung derart beeinflußt werden kann, daß die bei Steuerbewegungen über den Steuerknüppel in die Hand des Piloten wirkende Steuerkraft diesem bereits unmittelbar das Gefühl dafür vermittelt, mit welcher Knüppelbewegung in einer gegebenen Situation zu reagieren ist.

Aus der GB-A-2 135 796 ist eine Trimmvorrichtung bekannt, bei der an der dem Steuergestänge gegenüberliegenden Seite des Steuerknüppels über eine Feder ein Stellantrieb angreift. Bei der Ansteuerung für diesen Stellantrieb wird als äußeres Meßsignal jedoch lediglich ein Signal für die Nickrate des Hubschraubers, jedoch kein von der Horizontalgeschwindigkeit abhängiges Signal verwendet. In der US-A-3 700 995 geht es um eine Trimmeinrichtung, bei der ein Meßsignal für die Horizontalgeschwindigkeit lediglich dazu verwendet wird, gewisse Verstärkungsfaktoren für andere Meßsignale zu beeinflussen, beispielsweise für die Nickrate oder die Veränderung der Position des Steuerknüppels. In beiden Druckschriften ist nicht beabsichtigt, die weiter oben im Zusammenhang mit der Fig. 1 geschilderten Probleme der Steuerkraftstabilisierung zu bewältigen. Dies ist auch bei der in der GB-A-2 065 042 beschriebenen Trimmvorrichtung nicht der Fall, wo überhaupt keine geschwindigkeitsabhängigen Signale verwendet werden.

Der Erfindung liegt die Aufgabe zugrunde, eine Vorrichtung zur Steuerkraftstabilisierung der eingangs genannten Art bereitzustellen, mit deren Hilfe dem Piloten jederzeit auf eindeutige und störungssichere Weise durch die über den Steuerknüppel auf seine Hand wirkende Steuerkraft signalisiert wird, wie der Steuerknüppel in einer gegebenen Situation zu bewegen ist. Die Vorrichtung soll apparativ möglichst einfach aufgebaut sein, wobei die Notwendigkeit einer redundanten Auslegung zu vermeiden ist.

Diese Aufgabe wird gemäß der Erfindung durch die im kennzeichnenden Teil des Patentanspruchs 1 genannten Merkmale, gelöst.

Gemäß der Erfindung wird also, im Gegensatz zu der bekannten Vorrichtung, nicht in das am Steuerknüppel angelenkte und die Rotorblatteinstellung unmittelbar beeinflussende Steuergestänge eingegriffen, sondern vielmehr ist zusätzlich ein mit einer Feder verbundener Stellantrieb vorgesehen, wobei die Feder von der dem Steuergestänge gegenüberliegende Seite her am Steuerknüppel angreift. Zur Ansteuerung des Stellantriebes wird lediglich ein von der Fluggeschwindigkeit abhängiges Signal benötigt. Der sich aufgrund des Ansteuersignales ergebende Stellweg wird mit Hilfe eines Weggebers gemessen und auf den Eingang des Stellantriebes zurückgeführt. Die Funktionsweise der Anordnung wird weiter unten im einzelnen beschrieben.

Vorteilhafte Weiterbildungen der Erfindung ergeben sich aus den Unteransprüchen.

Im folgenden wird die Erfindung in zwei Ausführungsbeispielen anhand der Abbildungen näher erläutert. Es zeigen:

Fig.1 ein die Abhängigkeit von Längssteuerweg und Fluggeschwindigkeit wiedergebendes Diagramm,

Fig.2 das Blockschaltbild einer einfachen Ausführungsform der Erfindung,

Fig.3 das Blockschaltbild einer weiteren Ausführungsform der Erfindung.

Fig.2 zeigt einen Steuerknüppel 1, welcher der Beeinflussung der zyklischen Rotorblatteinstellung dient, wobei der Längssteuerweg D des Steuerknüppels 1 im Sinne zunehmender Werte durch einen Pfeil angedeutet ist. Der Steuerknüppel 1 ist um einen festen Drehpunkt 18 schwenkbar. An seinem unteren Ende ist einmal ein Steuergestänge 4 angelenkt, welches unmittelbar auf die zyklische Rotorblatteinstellung einwirkt, und zum anderen greift in etwa gegenüber dem Steuergestänge 4 eine Feder 2 am Steuerknüppel 1 an, welche mit einem Stellantrieb 3 verbunden ist. Der Stellantrieb 3 stützt sich an einem festen Referenzpunkt 19 ab und kann die Feder 2 je nach dem kommandierten Stellweg dehnen oder stauchen. Der Stellantrieb 3 erhält sein Eingangssignal von einem Leistungsverstärker 10, welcher wiederum über ein Additionsglied 6 angesteuert wird. Dieses Additionsglied 6 verarbeitet einmal ein von einem Fluggeschwindigkeitssensor 7 stammendes, geschwindigkeitsabhängiges Signal S und zum anderen ein Rückführsignal R, welches von einem Weggeber 5 geliefert wird, der den Stellweg des Stellantriebes 3 mißt. Dieses Rückführsignal R wird im allgemeinen bezüglich des Stellweg-Meßwertes mit einem vorwählbaren Proportionalitätsfaktor versehen sein. Im Signalweg vom Fluggeschwindigkeitssensor 7 zum Additionsglied 6 liegen noch ein Begrenzer 11 sowie ein Proportionalverstärker 12. Der Begrenzer 11 sorgt dafür, daß nur oberhalb eines vorbestimmbaren Schwellwertes der Fluggeschwindigkeit ein Signal weitergeleitet wird. Dieses kann je nach Art des Fluggeschwindigkeitssensors 7 zur Fluggeschwindigkeit proportional sein, aber auch etwa quadratisch mit ihr ansteigen, wie dies z.B. bei Verwendung eines Staudrucksensors der Fall ist.

Das am Ausgang des Begrenzers 11 abgegebene Signal wird im Proportionalverstärker 12 mit einem einstellbaren Proportionalitätsfaktor $K_p$ beaufschlagt, so daß schließlich vom Ausgang des Proportionalverstärkers 12 her das dem Additionsglied 6 zuzuführende, geschwindigkeitsabhängige Signal S geliefert wird.

Die Funktionsweise der in Fig.2 dargestellten Vorrichtung ist wie folgt: Zunächst sei angenommen, daß der Steuerknüppel 1 mit Hilfe einer üblichen (nicht dargestellten) Trimmvorrichtung in einem gegebenen Flugzustand ausgetrimmt, d.h. kräftefrei ist. Liegt die Fluggeschwindigkeit v oberhalb der vorgegebenen Schwelle, so steht am Additionsglied 6 zwar ein geschwindigkeitsabhängiges Signal S an, aufgrund des Rückführsignales R ist im stationären Zustand jedoch am Ausgang des Additionsgliedes 6 kein Signal mehr vorhanden, d.h. es liegt ein konstanter Stellweg des Stellantriebes 3 vor. Wird nun durch Betätigung des (nicht dargestellten) Leistungshebels eine Geschwindigkeitserhöhung eingeleitet, so führt dies sofort zu einem gewissen Anstieg der Vorwärtsgeschwindigkeit, wobei nun durch entsprechende Bewegung des Steuerknüppels 1 eine Korrektur der Nicklage des Hubschraubers zu erfolgen hat, da sonst aus dem Geradeausflug ein Steigflug wird. Die erhöhte Vorwärtsgeschwindigkeit hat einen Anstieg des geschwindigkeitsabhängigen Signales S zur Folge, so daß der Stellantrieb 3 ein Ansteuersignal erhält, welches eine Verringerung des Stellweges und damit eine Dehnung der Feder 2 bewirkt. Der damit verbundene Zug auf den unteren Teil des Steuerknüppels 1 vermittelt dem Piloten gleichzeitig einen nach hinten wirkenden Druck in die Hand. Bei einer Geschwindigkeitserhöhung im unteren Fluggeschwindigkeitsbereich ist der Längssteuerweg gemäß der durchgezogenen Kurve in Fig.1 zu vergrößern, d.h. der Steuerknüppel nach vorn zu kippen. Tut der Pilot dies, so muß er die Feder 2 weiter dehnen, so daß die Steuerkraft zunimmt. Gerade dies ist aber im Falle einer Geschwindigkeitserhöhung verlangt. Die nun einsetzende weitere Geschwindigkeitserhöhung bewirkt zusätzlich, daß aufgrund des Anstiegs des geschwindigkeitsabhängigen Signales S der Stellweg des Stellantriebes 3 weiter verringert, die Feder 2 also noch weiter gedehnt wird. Der Pilot wird also bereits zu Beginn seiner Korrekturbewegung des Steuerknüppels 1 durch den aufgrund der Erfindung sich ergebenden, geschwindigkeitsabhängigen Steuerkraftverlauf veranlaßt, den Steuerknüppel 1 sozusagen blind in die richtige Richtung zu bewegen. Durch den Verstärkungsfaktor $K_p$ des Proportionalverstärkers 12 kann dafür gesorgt werden, daß die Stellwegverringerung im Falle einer eingeleiteten Geschwindigkeitserhöhung ausreichend bemessen ist.

Im oberen Geschwindigkeitsbereich, d.h. rechts vom Maximum der durchgezogenen Kurve in Fig.1, wo eine negative Steigung vorliegt, ergibt sich folgendes Verhalten der dargestellten Anordnung: Die durch Betätigung des Leistungshebels eingeleitete kleine Erhöhung der Vorwärtsgeschwindigkeit hat wiederum eine entsprechende Verkürzung des Stellweges zur Folge. Die Feder 2 wird gedehnt, es ergibt sich ein nach hinten wirkender Druck in die Hand des Piloten. Will dieser nun eine Vorwärtsbewegung des Steuerknüppels 1 einleiten, so bewirkt dies in dem nunmehr vorausgesetzten oberen Geschwindigkeitsbereich eine sofortige Verminderung der Fluggeschwindigkeit, der Stellweg des Stellantriebes 3 wird sofort entsprechend vergrößert, die Feder 2 entspannt,und der Pilot spürt ein sofortiges Nachlassen des Widerstandes des Steuerknüppels 1, d.h. eine Verminderung der Hand- bzw. Steuerkraft. Dies signalisiert ihm unverzüglich, daß in diesem Falle eine Vorwärtsbewegung des Steuerknüppels 1 nicht angebracht ist. Läßt er hingegen den Steuerknüppel 1 unter dem Zug der Feder 2 sich zurückbewegen, was gleichbedeutend mit einer Verringerung des Längssteuerweges D ist, so bewirkt dies gemäß der ausgezogenen Kurve in Fig.1 im oberen Geschwindigkeitsbereich eine gleichzeitige Erhöhung der Geschwindigkeit. Infolgedessen wird der Stellweg verkürzt, die Feder 2 weiter gedehnt, und zwar in stärkerem Ausmaße als es der relativ langsam erfolgenden Rückwärtsbewegung des Steuerknüppels 1 entspricht. In diesem Falle wird eine Rückwärtsbewegung des Steuerknüppels 1 also ebenfalls eine Erhöhung der Hand- bzw. Steuerkraft zur Folge haben, ganz im Sinne der eingangs gestellten Forderungen. Die in Fig.2 dargestellte Vorrichtung ermöglicht es dem Piloten also ohne Kenntnis des Geschwindigkeitsbereiches, in dem er sich gerade befindet, durch vorsichtiges Einfühlen in die Reaktion des Steuerknüppels 1 die gerade erforderliche Knüppelbewegung in der richtigen Richtung einzuleiten.

In Fig.1 ist noch eine gestrichelte Kurve eingezeichnet, die von einer bestimmten Fluggeschwindigkeit v ausgehend, stetig ansteigt. Diese Kurve gibt den Einfluß der erfindungsgemäßen Maßnahme auf die Hand- bzw. Steuerkraft P in Abhängigkeit von der Fluggeschwindigkeit wieder. Demnach steigt die Handkraft, die im unteren Geschwindigkeitsbereich dem Längssteuerweg D an sich proportional ist, auch dann stetig weiter an, wenn die durchgezogene Kurve, den realen Längssteuerweg D wiedergebend, nach Durchlaufen ihres Maximums im Bereich hoher Fluggeschwindigkeiten wieder abfällt. Der Verlauf der gestrichelten Kurve P (v) hängt davon ab, welche Art von Fluggeschwindigkeitssensor verwendet wird und wie der Verstärkungsfaktor $K_p$ des Proportionalverstärkers 12 bemessen wird. Wird ein Staudrucksensor als Fluggeschwindigkeitssensor verwendet, so ergibt sich hinsichtlich des geschwindigkeitsabhängigen Signales S eine quadratische Geschwindigkeitsabhängigkeit. Jedoch ist es auch möglich und zugelassen, die Fluggeschwindigkeit auf andere Weise zu messen, wobei sich beispielsweise ein linearer Zusammenhang des Signales S und der Geschwindigkeit v ergeben kann.

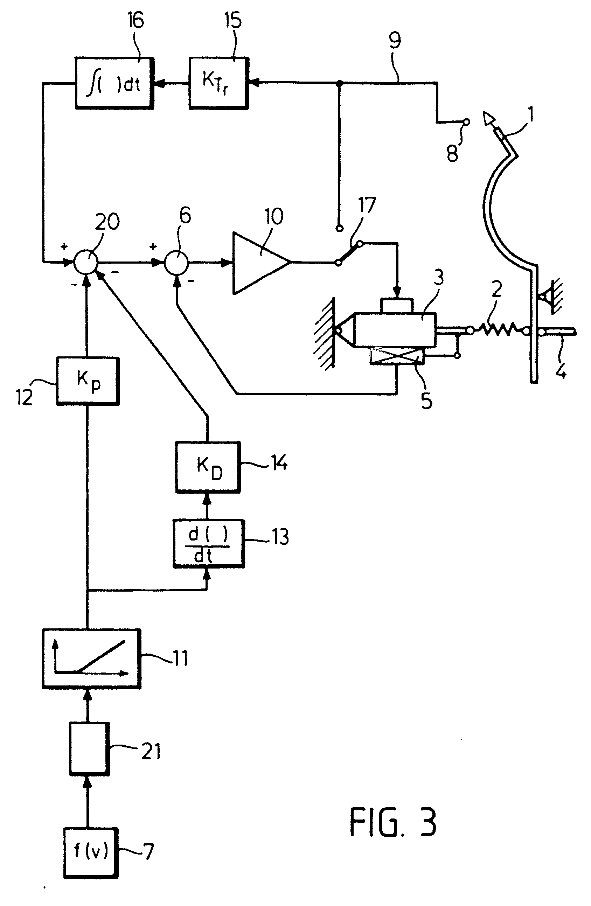

Fig.3 zeigt das Blockschaltbild einer weiteren Ausführungsform der erfindungsgemäßen Vorrichtung, wobei hier als Stellantrieb 3 der normalerweise sowieso vorhandene Trimmotor verwendet wird. Am oberen Ende des Steuerknüppels 1 befindet sich ein Trimmschalter 8, mit dem es möglich ist, eine Trimmleitung 9 wahlweise auf positive oder negative Spannung zu legen, solange der Trimmschalter 8 betätigt wird. Die Trimmleitung 9 verzweigt sich und führt einmal zu einem Umschalter 17, mit dessen Hilfe der Trimmschalter 8 direkt mit dem Eingang des Stellantriebes 3 bzw. Trimmotors verbunden werden kann. In der anderen, in der Fig.3 wiedergegebenen Stellung des Umschalters 17 wird das Trimmsignal zunächst einem Proportionalverstärker 15 und dann einem Integrator 16 zugeleitet. Es folgt ein Subtraktionsglied 20, in dem zwei weitere Signale subtrahiert werden. Das resultierende Signal gelangt zu dem Additionsglied 6, in welchem das vom Weggeber 5 stammende Rückführsignal addiert wird. Das vom Fluggeschwindigkeitssensor 7 abgegebene Signal gelangt zunächst zu einem Tiefpaß-Filter 21, anschließend zu einem Begrenzer 11, der erst oberhalb eines vorwählbaren Schwellwertes der Fluggeschwindigkeit ein Ausgangssignal abgibt, welches schließlich über einen Proportionalverstärker 12 dem Subtraktionsglied 20 zugeleitet wird. Parallel zum Proportionalverstärker 12 liegen in Reihe ein Differenzierglied 13 sowie ein anschließender Verstärker 14. Dieser Parallelzweig hat eine Dämpfungsfunktion, vor allem im Hinblick auf die Vermeidung von Dauerschwingungen und damit auf eine Erhöhung der dynamischen Stabilität.

Die Funktionsweise der gezeigten Anordnung ist insoweit analog zu der der Fig.2, als die auch dort bereits gezeigten Komponenten und Signalwege betroffen sind.

In Fig.3 ist zusätzlich explizit dargestellt, wie die übliche Austrimmung des Steuerknüppels 1 mit der erfindungsgemäßen Maßnahme zusammenwirkt. Ist nach einer durchgeführten Fluggeschwindigkeitsänderung ein neuer stabiler Flugzustand hergestellt, ohne daß der Steuerknüppel 1 ausgetrimmt ist, so kann der Pilot über den Trimmschalter 8 eine beispielsweise positive Spannung auf die Trimmleitung 9 geben, wodurch in der gezeigten Stellung des Umschalters 17 mit Hilfe des Trimmotors bzw. Stellantriebes 3 eine Änderung des Stellweges dahingehend bewirkt wird, daß durch Änderung der Federspannung ein kräftefreier Zustand des Steuerknüppels 1 eintritt. Aus diesem neuen Gleichgewichtszustand heraus können jederzeit Fluggeschwindigkeitsänderungen eingeleitet werden, wobei dann der vom Fluggeschwindigkeitssensor 7 zum Subtraktionsglied 20 und weiter zum Additionsglied 6 führende Signalweg in Aktion tritt, analog zu der bereits für Fig.2 geschilderten Funktionsweise. Selbstverständlich ist es möglich, die Summationsglieder 20 und 6 in einer Komponente zusammenzufassen, wobei die richtige Polarität der eingespeisten Signale zu beachten ist. Der Pilot hat jederzeit die Möglichkeit, Trimmkommandos durch entsprechendes Einstellen des Umschalters 17 direkt auf den Trimmotor zu geben.

Die oben im Zusammenhang mit Hubschraubern beschriebene Erfindung ist auch auf andere, nicht dem Drehflüglertyp zugehörige Flugzeuge anwendbar. Auch dort liegt die bei der Diskussion der Fig.1 erwähnte Problematik vor. Geschwindigkeitsänderungen werden dort ebenfalls mit einem Leistungs- oder Gashebel, der auf die Triebwerke wirkt, und einem Steuerknüppel, der auf die Höhenrudereinstellung wirkt, vorgenommen, wobei auch hier anschließend an die Leistungshebelbetätigung eine Nicklagekorrektur mit dem Steuerknüppel erfolgt.

## Patentansprüche

1. Vorrichtung zur Steuerkraftstabilisierung bei einem Drehflügelflugzeug, mit einem Steuerknüppel (1), einem an diesem angelenkten, die Rotorblatteinstellung beeinflussenden Steuergestänge (4), einem Stellantrieb (3) sowie einem dessen Stellweg messenden Weggeber (5) und einem Fluggeschwindigkeitssensor (7) sowie einem eingangsseitig mit diesem und dem Weggeber (5) und ausgangsseitig mit dem Stellantrieb (3) verbundenen Additionsglied (6), **dadurch gekennzeichnet,** daß der Stellantrieb (3) sich einerseits an einem festen Referenzpunkt (19) abstützt und andererseits mit einer gegenüber dem Steuergestänge (4) am Steuerknüppel (1) angreifenden Feder (2) verbunden ist.

2. Vorrichtung nach Anspruch 1, **dadurch gekennzeichnet,** daß zwischen Fluggeschwindigkeitssensor (7) und Additionsglied (6) ein Proportionalverstärker (12) sowie parallel zu diesem ein Zweig mit einem Differenzierglied (13) und nachfolgendem Verstärker (14) eingeschaltet sind.

3. Vorrichtung nach Anspruch 1 oder 2, **dadurch gekennzeichnet,** daß der Stellantrieb (3) ein Trimmotor ist und das Additionsglied (6) eingangsseitig zusätzlich über einen Trimmschalter (8) mit einer zweipoligen Trimmspannungsquelle verbindbar ist.

4.  Vorrichtung nach Anspruch 3, **dadurch gekennzeichnet**, daß zwischen Trimmschalter
    (8) und Additionsglied (6) in Reihe ein Proportionalverstärker (15) und ein Integrator (16) eingeschaltet sind.

5.  Vorrichtung nach Anspruch 3 oder 4, **dadurch
    gekennzeichnet**, daß der Eingang des als
    Stellantrieb (3) verwendeten Trimmotors über
    einen Umschalter (17) direkt mit dem Trimmschalter (8) verbindbar ist.

**Claims**

1.  Device for control-force stabilisation of a
    rotary-wing aircraft comprising a control stick
    (1), thereto hinged control rod (4) which effects
    the rotor-blade setting, an actuator drive (3) as
    well as motion transducer (5), which measures
    its actuation, and a flight-speed sensor (7) as
    well as addition means (6), which is connected
    on the input side to the latter and to the motion
    transducer (5) and on the output side to the
    actuator drive (3), characterised in that the
    actuator drive (3) supports itself on the one
    side against a fixed reference point (19) and is
    connected on the other side to a spring (2)
    which is attached to the control stick (1) opposite to the control rod (4).

2.  Device according to claim 1, characterised in
    that a proportional amplifier is fitted between
    the fight-speed sensor (7) and the addition
    means (6), and parallel thereto is a branch
    comprising differentiating means (13) and on
    its output side an amplifier (14).

3.  Device according to claim 1 or 2, characterised
    in that the actuator drive (3) is a trim motor,
    and that the addition means (6) is additionally
    connectable on the input side via a trim switch
    (8) to a two-pole trim-voltage source.

4.  Device according to claim 3, characterised in
    that a proportional amplifier (15) and an integrator (16) are fitted in series between trim
    switch (8) and addition means (6).

5.  Device according to claim 3 or 4, characterised
    in that the input of the trim motor, which is
    used as actuator drive (3), is directly connectable via a switch (17) to the trim switch (8).

**Revendications**

1.  Dispositif pour la stabilisation de la force sur le
    manche à balai dans un giravion comprenant
    un manche à balai (1), une tringlerie de commande (4) articulée sur le manche à balai et
    agissant sur la commande de variation cyclique de pas, un servo-moteur (3) ainsi qu'un
    capteur de course (5) mesurant la course de
    réglage dudit servo-moteur et un capteur de
    vitesse de vol (7) ainsi qu'un organe additionneur (6) relié côté entrée audit capteur de
    vitesse et au capteur de course (5) et côté
    sortie au servo-moteur (3), **caractérisé** en ce
    que le servo-moteur (3), d'un côté prend appui
    sur un point de référence (19) fixe et, de
    l'autre côté, est relié à un ressort (2) agissant
    sur le manche à balai (1) à l'opposé de la
    tringlerie de commande (4).

2.  Dispositif selon la revendication 1, **caractérisé**
    en ce qu'un amplificateur proportionnel (12) et
    en parallèle avec celui-ci un circuit comportant
    un organe différentiateur (13) suivi d'un amplificateur (14) sont montés entre le capteur de
    vitesse de vol (7) et l'organe additionneur (6).

3.  Dispositif selon la revendication 1 ou 2, **caractérisé** en ce que le servo-moteur (3) est un
    moteur d'équilibrage et l'organe additionneur
    (6) peut être relié côté entrée à une source de
    tension d'équilibrage à deux polarités par l'intermédiaire d'un commutateur d'équilibrage
    (8).

4.  Dispositif selon la revendication 3, **caractérisé**
    en ce qu'un amplificateur proportionnel (15) et
    un intégrateur (16) sont montés en série entre
    le commutateur d'équilibrage (8) et l'organe
    additionneur (6).

5.  Dispositif selon la revendication 3 ou 4, **caractérisé** en ce que l'entrée du moteur d'équilibrage utilisé comme servo-moteur (3) peut être
    reliée directement au commutateur d'équilibrage (8) par l'intermédiaire d'un inverseur (17).

# FIG. 1

# FIG. 2

FIG. 3